# EUROPEAN PATENT SPECIFICATION

(11) **EP 1 166 621 B1**
(45) Date of publication and mention of the grant of the patent: **10.05.2006**
(21) Application number: 00202138.4
(22) Date of filing: 19.06.2000
(51) Int. Cl.: A01G 7/00, A01G 1/06

(54) **Method, device and warehouse for cultivating crop plants and grafts thereof**
Verfahren, Vorrichtung und Gewächshaus zum Züchten von Nutzpflanzen und Propfen dazu
Procédé, dispositif et serre pour la culture de plantes utiles et greffons obtenus

(43) Date of publication of application: 02.01.2002
(73) Proprietor: Agrifirm B.V., 7941 AS Meppel (NL)
(72) Inventor: Van Weel, Peter, 2671 KT Naaldwijk (NL)
(74) Representative: Prins, Adrianus Willem

(56) References cited:
- EP-A- 0 021 963
- WO-A-96/29855
- FR-A- 2 769 463
- GB-A- 601 875
- NL-C- 1 007 449
- US-A- 5 584 140

## Description

This invention relates to a method for cultivating crop plants having a shoot-root plant body. Such crop plants are for example tomatoes, cucumbers, egg-plants, peppers and the like.

Crop plants having a shoot-root plant normally grow from the top, the crop growing near the top of said plant. Once crop has grown on part of the plant and has been harvested, said part will not bear further crop. Crop plants having a shoot-root plant body can grow to great length, for example over 15 m for tomatoes or even over 30 m for cucumber. This has the disadvantage that the distance between the crop growing part of the plant, near the top, and the roots will become larger. This results in an increasing distance over which nutritious substances have to be forwarded from the roots to the crop. This results in smaller crop.

NL 1007449 discloses a method for continuously growing and harvesting crop of tomato plants, planted in guttershaped hanging baskets. The crop growing top of the plants is suspended from suspension means. The height of the hanging baskets is adjustable so as to adapt this height for every specific growing and/or harvesting stage. The stem portion between the top and the roots, which is continuously growing during the lifetime of the plants, hangs in loops next to the hanging baskets.

Furthermore from FR-A-2 769 463 a method is known to shorten a date palm, wherein new roots are grown on a portion of the stem just below the crown of the palm by surrounding this portion by a collar filled with a growing medium. The palm is then felled and the stem cut away up to the newly grown roots, where after the crown is replanted with the newly grown roots.

The present invention relates to a method for cultivating crop plants, in which these disadvantages of known methods are eliminated. To this end a method according to the present invention is characterized by the features of claim 1.

In a method according to the invention the plant length is controlled such that between the crop growing part of the plant and the roots in contact with growing medium closest to said part, a relatively small distance is maintained. Preferably said stem length is kept substantially constant during the live cycle of said crop plant.

By keeping said stem length relatively small the nutritious materials have to be transported over small distances during the live cycle of the crop plant. Therefore optimal crop will be harvested during relatively long periods of time. In the known methods of cultivating crop plants the crop plants are removed and replaced by new, young plants after a couple of months since the yield and quality of the crop will then become insufficient. In a method according to the present invention the life cycle of the plant can be for example one or even several years, during which time the yield and quality will be substantially constant and high. A further advantage of a method according to the invention is that the overall length of the plant will be relatively short during the live cycle thereof. The basically useless or even unfavorable part of the stem between the roots in contact with the grow medium and the crop growing part, on which part no crop grows and which part normally can be several meters long, is kept short. Therefore, said part does not obstruct for example passage ways, floor parts or the like around the plant. This also enables easier harvesting of the crop.

Preparing part of the stem for new roots to grow thereon is to be understood in this application as at least meaning positioning of said stem part in or on growing medium such as water, earth, glass- or rock-wool or the like. Said stem part can also be mechanically and/or chemically treated by any commonly known means to initiate or accelerate root growth.

In a preferred embodiment a method according to the present invention is characterized by the features of claims 4 and 5.

Positioning of the stem part on which the new roots are grown substantially horizontal has the advantage that said stem part can relatively easily be brought into contact with grow medium such as water, over a relatively large length. Surprisingly, root growth on said stem part is improved and accelerated by positioning at least part of the existing roots at a level higher than at least part of the stem part on which the new roots are grown. The inventor has had the surprising insight that by positioning said root part higher than said stem part on which new roots are to be grown the normal equilibrium in at least hormones in the crop plant is disturbed such that lesser root growth inhibiting hormone is transported to the stem and/or more root growing hormone is transported in the direction of the stem part next to the roots for initiating or accelerating root growth thereon. Without prejudice, it is believed that especially auxins are of importance in this effect. This effect can even be further enhanced by providing for means blocking root growth on the roots distanced from said part new roots are growing on. This can for example be obtained by bringing said roots out of contact with growth medium, by at least partly cutting said roots or any other means known in the art.

In a further advantages embodiment a method according to the present invention is characterized by the features of claim 7.

Suspension of the top of said plant from suspension means, such that the top part, more particularly part of the crop growing part of the plant extends substantially vertically, meaning that relatively little space is necessary for said plant, whereas proper use can be made of the available light. By periodically lower the top, such that it can grow back on again, meanwhile retracting the roots at least partly in a direction away from said top, a stem part near to or, preferably adjacent the roots can be brought into contact with growth medium, such that new roots can grow on said stem part. At least part of the older roots can be brought out of contact with said growth medium. In this way the stem length between the roots in contact with the growth medium and the crop growing part of the plant can be regulated during use, especially be kept at a relatively short and preferably substantially constant length. The stem part on which the roots are to be grown are preferably brought into contact with a growth medium in receiving means. It should be clear to any person skilled in the art that the roots are to be moved relative to the growth medium, whereby the receiving means, that is the growth medium, the roots or both can be moved. It is equally possible to position new growth medium along a part of the stem on which roots are to been grown, after which the growth medium together with said stem part can be retracted.

In further elaboration of the present invention a method is characterized by the features of claim 8.

By positioning said crop carrying part of the plant of which crop close to harvesting is suspended substantially horizontally said crop will be suspended substantially vertically downward, meaning that this crop can easily be harvested, for example by (robotic) means, which are moved under said stem part.

In a preferred embodiment guide means are used, like a wire, which enable easy movement of the plant, as well as guidance thereof. Clamping means can be used to connect the plant to said guide means, such that said plant can easily be repositioned along said guide means.

It is preferred that in a method according to the present invention the roots are bred on water, especially on a tidal system. This has the advantage that the roots and/or the adjacent stem part can easily be moved along said growth medium. Moreover, such growth medium enables easy excess, proper nutrition and other known advantages.

In a method according to the present invention at least part of the root bearing part of the plant can be cut off. This means that the overall length of said plant can be kept relatively short.

The present invention further relates to a device for cultivating crop bearing plants, characterized by the features of claim 16.

With such device crop bearing plants having a shoot-root plant body can be easily cultivated, whereby during growth of said plants the stem length between a crop growing part of said plant and the nearest roots in contact with growth medium can be kept at a relatively short length. This has the advantage that optimal use can be made of nutrias substances in crop growing.

The invention further relates to a device and a crop growing plant, characterized by the features of claim 20.

Positioning the root bearing part of the plant in receiving means, part of the stem having shoots next to the top of the plant being suspended substantially vertically from suspension means has the advantage that relatively little space is necessary for such plant, wherein a relatively large part of the stem on which roots are to be grown can be brought into contact with growth medium, even if the latter is mainly water. By positioning this crop bearing part bearing crop at least substantially ready for harvest substantially horizontally has the advantage that this crop can easily be harvested.

The present invention further relates to a warehouse for cultivating crop plants, characterized by the features of claim 23.

In a preferred embodiment a warehouse according to the present invention is further characterized by the features of claim 24.

By positioning lighting means in the warehouse, substantially above the crop bearing and/or the flowering parts of the plants has the advantage that sufficient light can be provided. Since a method according to the present invention and with devices according to the present invention the overall height of the plant above the floor of the warehouse can be kept relatively small and constant, such positioning of the lighting means will be possible.

Further advantageous embodiments of a method, device and warehouse according to the present invention are given in the dependent claims. In further elucidation embodiments of a method, device and warehouse according to the present invention are described herebelow, referring to the accompanying drawings. Thereon shows:
figure 1 schematically part of a device according to the present invention, in a first embodiment;
figure 2 a number of devices according to figure 1 in a warehouse;
figure 3 a first alternative embodiment of a device according to the present invention;
figure 4 in side view a second alternative embodiment of a device according to the present invention;
figure 5 a perspective view of part of a device according to figure 4;
figure 6 in side view a third alternative embodiment of a device according to the present invention;
figure 7 in side view a fourth alternative embodiment of a device according to the present invention;
figure 8 schematically in top view clamping means for the roots; and
figure 9 schematically a clamp for wires, used in a device according to the present invention.

In this description in the various embodiments, identical or corresponding parts have identical or corresponding reference signs, increased by a hundred or a multiplicity thereof. In this description a crop plant having a shoot-root plant body should be understood as including at least plants which primarily grow from the top, away from the roots, whereby crop grows near the top. Once crop has grown on part of the plant, especially on the stem, no further crop will grow on said part. Plants having such shoot-root plant body include for example tomatoes, cucumbers, eggplants, peppers and the like. However, these are only given as examples and should not be understood as limiting the scope of the invention.

In the description embodiments of methods, devices and warehouses are shown in which plants grow on a grow medium. In the embodiments shown mainly water is used as a grow medium, including when necessary added substances such as nutritious substances, chemical compounds and the like. However, it should be understood that any known grow medium could be used in a method or device according to the present invention. Such grow media specifically also include earth, rock wool, cocos, synthetic wool, glass wool, oasis or the like.

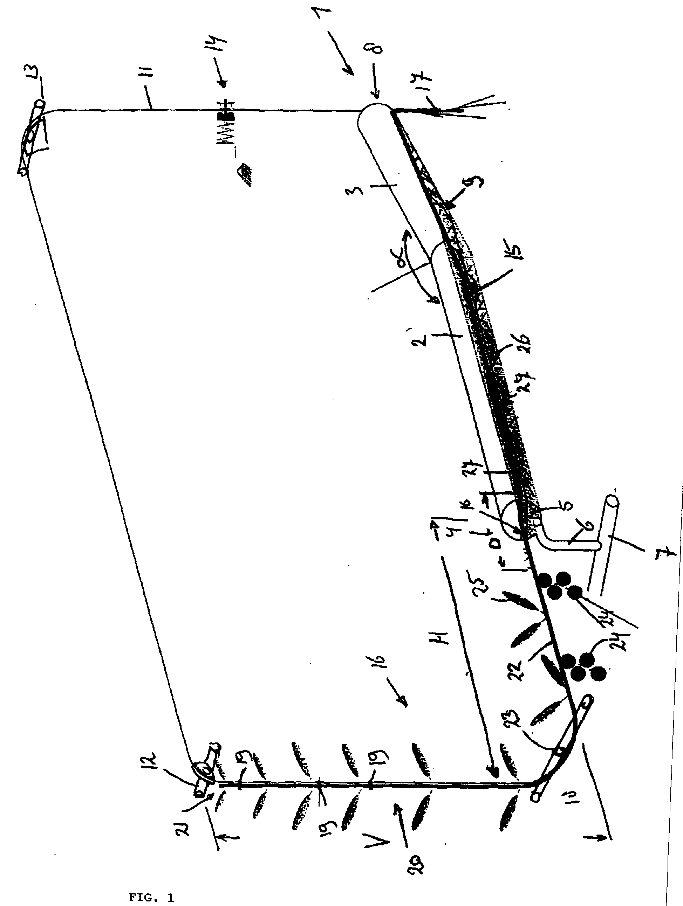

Figure 1 shows, schematically and in perspective view, a first embodiment of a device 1 according to the present invention. This device comprises a first tubular member 2 and a second tubular member 3, connected thereto, the first and second tubular members 2, 3 enclosing an angle α. The first tubular member 2 extends substantially horizontally and is at the first end 4, opposite the second tubular member 3 provided with an end plate 5 closing approximately the lower half of the open first end 4. A water pipe 6 extends through said end plate 5 and is connected to a supply pipe 7, through which supply pipe 7 and water pipe 6 water, comprising for example nutritious substances, chemical compounds and the like, further to be referred to as water, can be brought into the tubular members 2, 3 and removed therefrom. The tubular members 2, 3, the water pipe 6 and the supply pipe 7 therefore form a tidal system as commonly known. The second tubular member 3 slopes upward in the direction of its free end 8, opposite the first tubular member 2, such that when water is brought into the first tubular member 2 only a small amount thereof flows into the second tubular member 3, most of said tubular member 3 extending above the maximum water level 9, determined by the upper edge 10 of the end plate 5.

A guide wire 11, forming a closed loop, extends through the first and second tubular members 2, 3 and is guided around a first guide element 12 and a second guide element 13. The first guide element 12 extends in front of and above the first end 4 of the first tubular member 2. The horizontal distance H and the vertical distance V between said first end 4 and said first guide element 12 will be discussed later. The second guide element 13 extends approximately above the free end 8 of the second tubular member 3, at approximately the same height as the first guide element 12, although this second guide element 13 could be positioned differently. Somewhere along the guide wire 11 a first clamping means 14 is positioned, which can releasably clamp the guide wire 11 to maintain this in a given position. After release of the first clamping means 14, the guide wire 11 can be moved over the guide elements 12, 13 and through the tubular members 2, 3, for reasons to be discussed hereafter. A double working embodiment of the first clamping means 14 is schematically given in figure 9.

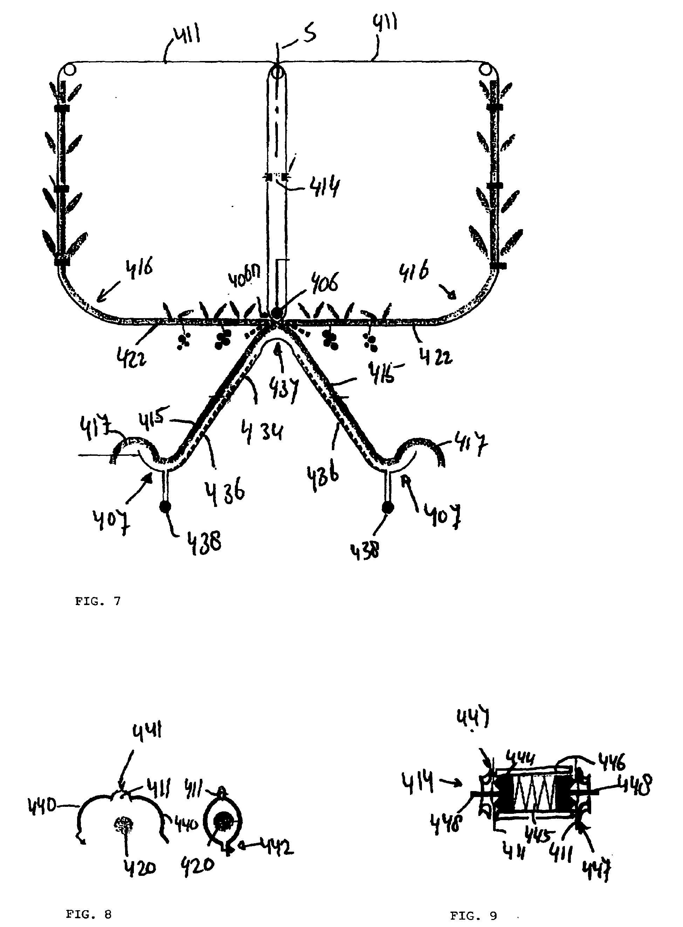

In the embodiment shown in figure 1 a root growing part 15 of a shoot-root plant body 16 extends through the first and second tubular members 2, 3, the free end 17 of the root growing part hanging from the free end 8 of the second tubular member 3, outside the device 1. The opposite end of the root growing part 15 is connected to the stem 18 of the plant body, which stem 18 is guided along the guide wire 11 and clamped thereto by second clamping means 19, as shown in figure 8, in open and closed position. With these second clamping means 19 a first part 20 of the stem is connected to the vertical part of the guide wire 11, hanging from the first guide element 12, such that the top 21 of said first stem part 20 extends near said first guide element 12. A second stem part 22, extending between the root growing part 15 and the first stem part 20 extends substantially horizontally along the guide wire 11. A third guide element 23 may be positioned near the transition between the horizontal and vertical parts of the guide wire 11, for guiding the guide wire 11 and the stem parts 20, 22. The horizontal second stem part 22 bears crop 24 approximately ready for harvesting, whereas on the first stem part 20, extending substantially vertically, new leaves and new crop is growing. The leaves 25 on the second stem part 22 will grow at least partly upward, whereas the crop 24 will, due to gravity, hang downwards from said second stem part 22. Therefore, said crop 2 is hanging free from the leaves 25 and the second stem part 22 and can easily be harvested with robotic means, to be driven under said second stem part. Robotic harvesting means are well known and conceivable by a person skilled in the art.

As can be understood from the paragraph above, said horizontal distance H is preferably such that all crop 24 approximately ready for harvesting grows on said second stem part 22 extending horizontally, whereas the vertical distance V is preferably such that the top 21 extends or at least grows to near the first guide element 12. Thus optimal use can be made of the light and room available for the device and the plants.

During use crop 24 is harvested from the second stem part 22, after which the guide wire 11 is released by the clamping means 14 and then pulled through the tubular members 2 and 3 over for example a distance comparable to the horizontal distance H, in the direction of the free end 8 of the second tubular member 3, together with the root growing part 15. The free end 17 which was hanging outside the second tubular member 3 has been exposed to daylight and will have dehydrated, the roots thereon will have died. By moving around the guide wire 11 the second stem part 22, originally extending horizontally outside the second tubular member 2 will at least partly be moved into said tubular member 2, preferably after removal of all crop 24 and leaves 25. The top 21 will be moved downward over a similar height, resulting in sufficient space for the top to grow up again in the direction of the first guide means 12. The second clamping means 19, especially the lower ones may be repositioned into the direction of the top 21, to maintain the connection between the guide wire 11 and the first stem part 20. The second stem part 22, now extending inside the first tubular member will, at least periodically, be brought into contact with the grow medium, especially said water 26. On this second stem part 22 now new roots 27 will grow, whereas the roots on at least part of the elder root growing part 15 will die in time. This results in the effect that the distance D between the crop 24 and the roots 27 closest to each other will be kept relatively small and preferably relatively constant during the prolonged life cycle of said root-shoot plant body 16. The overall length of said plant body 16, between the top 21 and the roots 27 will also be kept relatively small in comparison to ordinary methods for cultivating crop plants having a shoot root body, in which said length may, in time, increase to up to 10 to 15 meters or more. In a method according to the present invention, said stem length can be kept for example between one and five metres, more in particular between two and four metres. In a preferred embodiment, for example for growing tomatoes said stem length is preferably kept between two and three metres. Generally, it is preferred that the length of the stem of the plant 16 is limited to approximately the part bearing flowers and crop, including the growing top.

As can be understood from the above, in a method according to the present invention the plant body 16 is, preferably periodically pulled back into the grow medium 26, such that at least part of the stem from which crop has been harvested is brought into contact with said grow medium 27, for growing new roots thereupon. Part of the root growing part 15, maximally distanced from the top 21 is made to dehydrate, die or the like or is even cut off. This results in a relatively small distance between the roots and the crop growing parts. Nutrients therefore have to be moved over only a short distance from the roots to the crop and flowers, resulting in optimal crop. Moreover, the plant body 16 can be used over a very long period of time, theoretically even endless, resulting in a higher productivity, lower costs, higher efficiency, less occupation of space, more constant quality and further advantages.

In a method according to the present invention, the stem parts 22 can, during or previous to movement thereof into the grow medium be mechanically and/or chemically treated by any commonly known means to initiate or accelerate root growth. Such methods are specifically enclosed within the scope of the present invention. Surprisingly, it has been found that enclosing the angle α between the substantially horizontal first tubular member 2 and the second tubular member 3 has an advantageous effect on said root growth. Without prejudice, it is believed that positioning a root growing part within the second tubular member 3 or at least distanced relatively far from the crop at least partly at a level higher than the root growing part 15 in the second tubular member 3 or at least a part relatively close to the crop seems to have the effect that the normal equilibrium in at least hormones in the crop plant is disturbed such that lesser root growth inhibiting hormone is transported to the stem and/or more root growing hormone is transported in the direction of the stem part next to the roots, now extending inside the first tubular member 2, for initiating or accelerating root growth thereon. It is believed that especially auxins are of importance in this effect. Bringing the end of the root growing part out of contact with growth medium or cutting at least part of the roots of said root growing part will even further enhance this effect. Also other means for blocking root growth on the root growing part distanced from said part new roots are growing on may be used to the same effect.

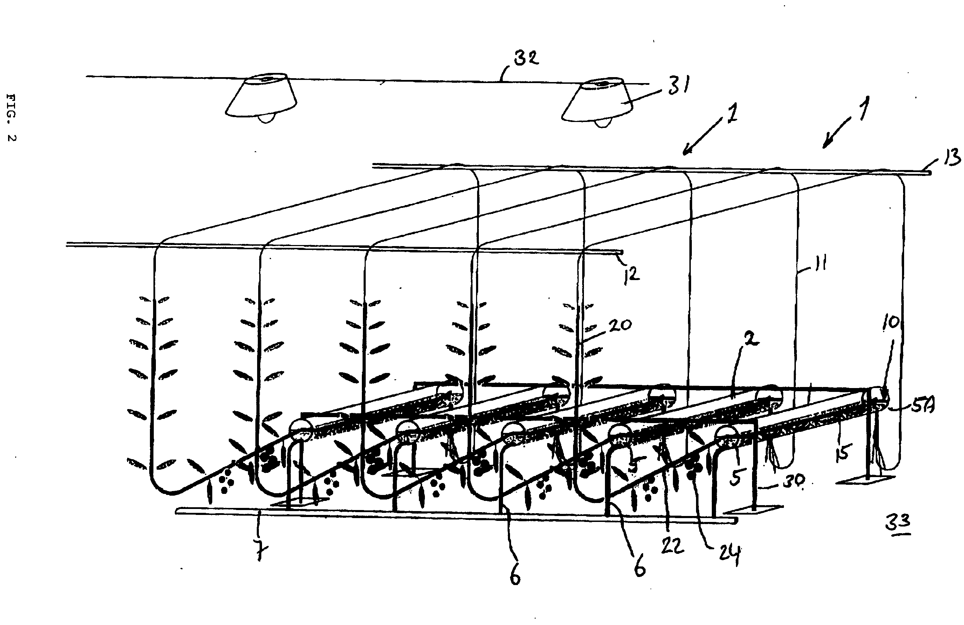

In figure 2, five tubular members 2 are shown, positioned parallel to each other, all provided with a guide wire 11 extending over first and second guide means 12, 13. In the embodiment shown, the first and second guide means 12, 13 are tubes or rods extending along all guide wires 11. In this embodiment, the tubular member 2 is approximately straight and has an end plate 5 at either side. Both end plates 5 close off approximately the lower half of the relative open end. As is clear from figure 2 in this embodiment the first stem part 20 once again extends vertically, the second stem part 22, carrying the crop 24 approximately ready for harvesting, approximately horizontally. The stem is slightly bend when crossing the endplate 5 at the forward end of the tubular member 2, such that the root growing part is positioned somewhat lower than the upper edge 10. At the opposite end the root growing part 15 extends over the upper edge 10 of the relevant end plate 5a and then hangs down approximately vertically. The roots on this hanging part will have died and may be cut off.

The supply pipe 7 extends in this embodiment along the front side of the tubular members 2, carried by a frame 30, water pipes 6 connecting the supply pipe 7 to the tubular members 2. The devices 1 according to figure 2 are positioned in a warehouse, for example a glass warehouse, not shown, as it is commonly known. The guide elements 12, 13 are suspended below a ceiling of said warehouse, such that lights 31 can be suspended over said devices 1, for example from a wire 32. The lights are for example artificial sunlights as commonly known from crop growing. Since the maximum length and maximum height of the stem, especially of the top 21 above the floor 33 of the warehouse is limited, sufficient space can be obtained between the guide elements 12, 13 and the roof of the warehouse for the lights. The floor 33 is kept free from for example roots, stems and the like.

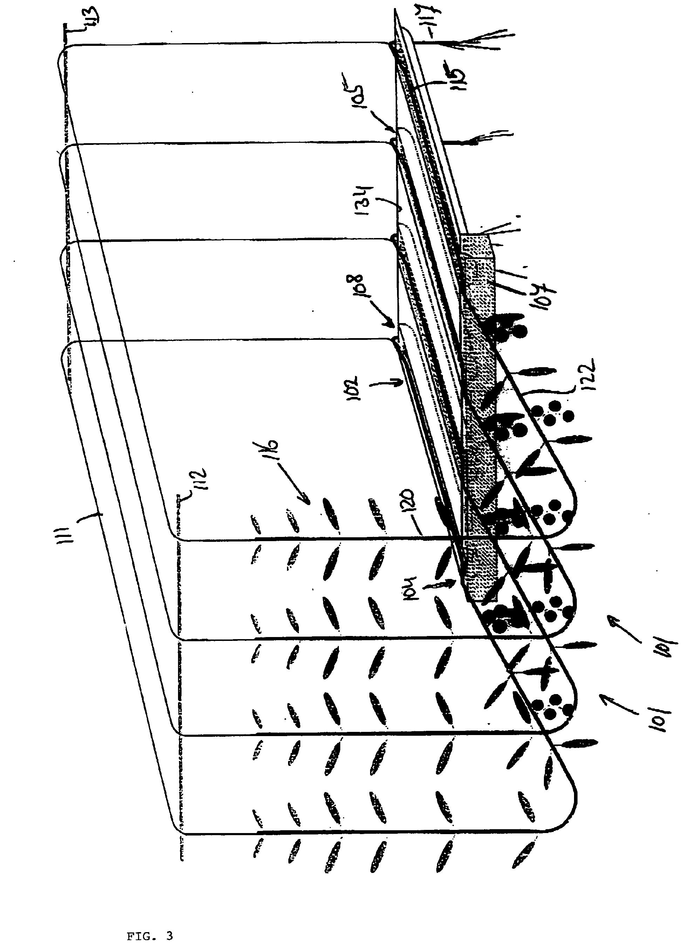

In figure 3 four guide wires 111 with crop growing plants 116 are shown, the guide wires again being guided over first and second guide elements 112, 113. In this embodiment a plate shaped element 134 is provided, comprising four half pipe shaped indentations 102 extending parallel to each other. At the, in figure 3, forward end 104 the half pipe indentations 102 are open and in fluid connection with a gutter 107 through which water as a growing medium can be brought into and from the half pipe indentations 102, for forming a tidal grow system. The other end 108, in figure 3 in the back, are once again closed by end plates 105. The root growing parts 115 once again hang over said end plates 105, the free ends 117 hanging down and dehydrating. At the other end, an approximately horizontal crop growing part 22 of the stem is again provided, connected to a vertically extending first stem part 120. The devices 101 can once again be used as described here above with reference to figures 1 and 2, by moving the guide wires 111 around the guide elements 112, 113 and through the tubular members 102. If desired, the half pipe indentations 102 may be covered, for example by light tight foil or plates, to shield the root growing parts from excessive light. The indentations 102 may be made integrally with the plate shaped element 134, the end plates 105 and the gutter 107, for example by vacuum forming. However, different elements may also be made separately and then assembled.

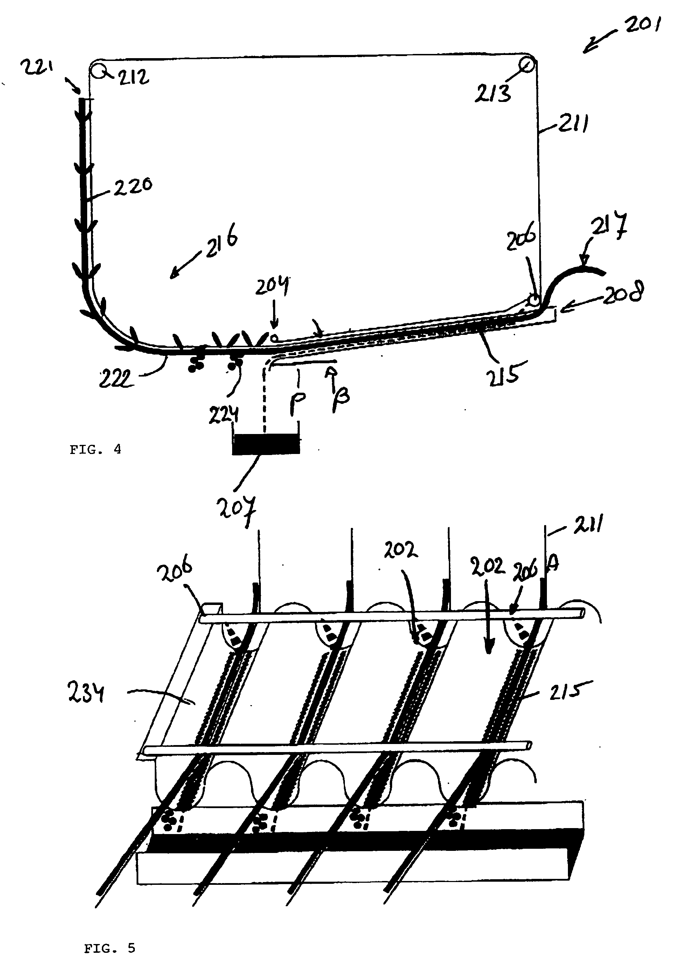

Figures 4 and 5 show a further embodiment of a device 201 according to the present invention, in which an undulated plate 234 is used for providing indentations 202. In this embodiment the undulated plate 243 encloses an angle b with the horizontal plane P, such that a first end 204 of each indentation 202 is positioned lower than a second end 208 thereof. The first end 204 in this embodiment is comparable to the first end 4 of the first tubular member 2 in figure 1, the second end 208 with the free end 8 of the second tubular member 3 of figure 1. The free end 217 of the root growing part 215 of the plant body 216 therefore lies higher than the horizontal second stem part 222 and the crop 224 hanging thereon. The root growing part 215 lies at the bottom of the indentation 202. The indentations 202 are open at both ends 204, 208. Under the first ends 204 of the indentations 202 a gutter 207 extends, above the second ends 208 of the indentations 202 extends a sprinkler tube 206, which is suitably perforated, providing openings 206A, such that during use water can be forced through said sprinkler tube 206 and through the openings 206A, into the sloping indentations 202, along the relevant root growing part 215 and into the gutter 207, from which it can be recycled. The guide wire 211 is again guided around guide elements 212, 213 and around the sprinkler tube 206, such that the guide wire 211 can be rotated once again, as previously described with reference to figures 1-3. The indentations 202 can be covered, for example by foil to shield the root growing parts 215 from excessive light and from dehydration.

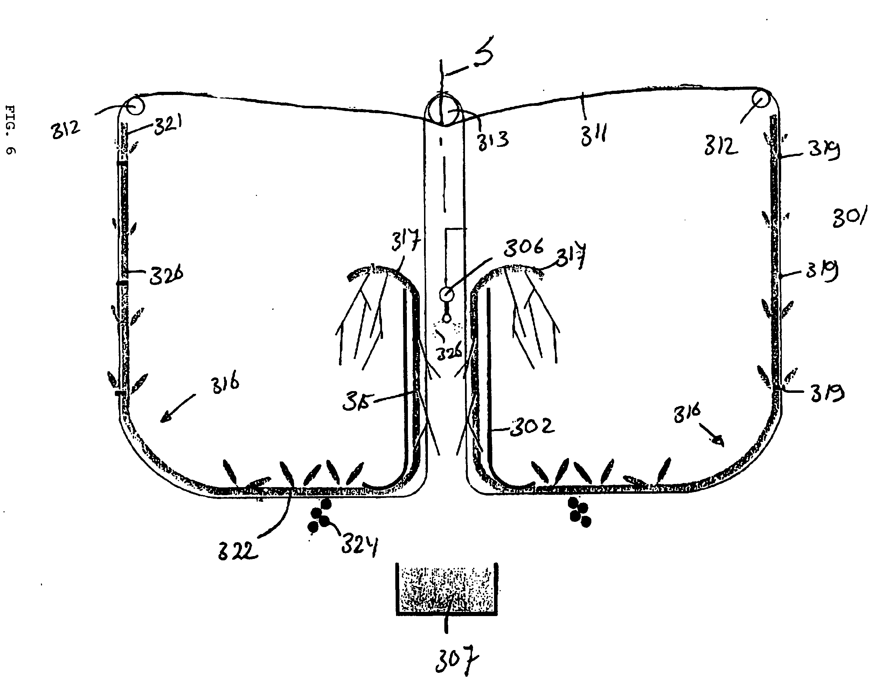

Figure 6 shows a further advantageous embodiment of a device 301, in which the root growing part 315 of a plant 316 extends substantially vertically, upward from the approximately horizontally extending second stem part 322, substantially parallel to the first stem part 320. In the embodiment shown in figure 6 two plants 316 extend symmetrically on either side of a centre vertical plane S. In said plane S a sprinkler tube 306 extends, near the upper free ends 317 of the root growing part. Walls 302 of for example plastic foil extend approximately vertically, parallel to the plane of symmetry S, on the sides of the root growing parts 315 opposite said plane S. Water 326 can be sprinkled from said sprinkle tube 306 against the root growing parts 315 mainly below said sprinkler tube 306, the free ends 317 therefore dehydrating and slowly dying. These free ends 317 can, if desired, be cut off. Excessive water 327 will be gathered in a gutter 307 extending below said walls 302. In the embodiment shown two guide wires 311 are guided around a first guide element 312 and a shared second guide element 313, for use as previously discussed. Once again, the first stem parts 320 are connected to the guide wire 311 by clamping means 319.

In a still further embodiment, as shown in figure 7, again two guide wires 411 are provided for two crop plants 416, extending on either side of a plane of symmetry S perpendicular to the plane of the drawing. In this embodiment, a plate shaped element 434 extends under the guide wires 411 and has a somewhat inverted V-shaped cross-section, the top extending in the plane of symmetry S. The plate 434 comprises two legs 436, sloping from a top 437. At the lower end of each leg 436 a gutter 407 is provided, connecting to a water recycling pipe 438. Directly above the top 437 a sprinkler pipe 406 extends, parallel to said top 437, which is provided with a series of openings 406A through which water can be sprinkled onto the legs 436 and the root growing parts 415 of the plants 416. The root growing parts 415 on the right leg 436 in figure 7 are connected to the second stem part 422 extending to the left of the plane of symmetry S in figure 7, the root growing part 415 on the, left legs being connected to the stem part 422 at the right side of the plane of symmetry S. A double working clamp 414 is positioned in the plane of symmetry, clamping both guide wires 411 releasably. In this embodiment, which can be used similar to the previously disclosed embodiments, water is gathered in the gutters 407, whereas the free ends 417 extend passed said gutters and dehydrate there. Since they are positioned higher than the lowest part of said root growing part 415, said equilibrium in hormones will be disturbed.

Figure 8 shows clamping means 19-419 for clamping the stem 20-420 to the wire 11-411. These clamping means have two legs 440, connected by a living hinge 441. In closing the legs 440 against each other a snap lock 442 is obtained, clamping the wire 11-411 and embracing the stem 20-420, preferably with a little play. The clamping means can be reopened for repositioning.

Figure 9 shows schematically clamping means 14-414 for the guide wire 11-411. These clamping means 14-414 comprise two clamping bodies 444, forced apart by a spring 445. The bodies 444 are enclosed within a tubular housing 446, which housing is provided with two parallel openings 447 through which the guide wires 411 extend. Each body comprises a rod-shaped element 448 extending through the side of the housing 446, such that by pushing said rod-like elements 448 toward each other the bodies 444 will be pushed towards each other, compressing the spring 445. The bodies 444 are then moved away from the guide wires 411, such that the guide wires 411 can be moved. By releasing the bodies 448 the wires are clamped between the housing 446 and the bodies 444 and can therefore not be moved. The housing is positioned stationary, attached to the warehouse. Obviously other types of clamping means can also be used. For a single wire a similar device can be used having only one body.

In the embodiments shown the first stem part 20-420 extends substantially vertical. This is advantageous for reason of necessary space and light available and for optimal growing conditions. However, it will be clear that this part can also extend enclosing an angle with the vertical plane. Similarly, the second stem part 22-422 can enclose an angle with a horizontal plane, for example sloping downward or upward or even extending approximately vertically.

With a device according to the present invention, for example as shown in figure 1, also crop plants can be grafted, by positioning a shoot from a crop growing plant, for example a shoot comprising one leaf, partly into a tubular member, such that said leaf extends outside the tubular member, where after root growth is obtained on said part extending in the tubular member. Such can be done during use of the devices 1-401 as previously discussed.

For example a number of tubular elements or indentations can be positioned beside each other, half of the plants being inverted such that of two plants next to each other the first plant has its crop bearing second stem part 22-422 extending from a first end, the plant beside said plant having said second stem part 22-422 extending from the opposite end by rotating the relevant device 1-401 over 180°. This results in the effect that the plants can be positioned closer to each other, necessitating less space.

Other harvesting means can be used, whereas the crop can also be plucked manually. The tubular parts, indentations or plate-shaped elements for carrying the root growing parts can have any desired shape or length necessary or suitable for the relevant shoot-root plant body. Although it is advantageous to position the free end 17-417 of the root growing part 15-415 at a level higher than at least part of the further root growing part, such is not necessary. Other means can be used for obtaining root growth in particular on the stem part closest to the crop growing second stem part.

These and several similar variations of a method, device and warehouse according to the present invention are considered to fall within the scope of the present invention as described in the following claims.

## Claims

1. Method for cultivating crop plants (16, 116, 216, 316, 416) having a shoot-root plant body, wherein during growing part of the stem (22, 122, 222, 322, 422) preferably adjacent the roots (27) is prepared such that new roots grow on said stem part (22, 122, 222, 322, 422), which new roots are brought into contact with a grow medium (26), such that during production of crop (24, 124, 224, 324) the stem length between the shoot furthest from the roots (27) and the roots in contact with the grow medium (26) closest to said shoot is maintained at a relatively short length, compared to a normal length of said plant (16, 116, 216, 316, 416) at the same age.

2. Method according to claim 1, wherein said stem length is maintained at a substantially constant length.

3. Method according to claim 1 or 2, wherein said stem length is restricted to substantially the normal crop growing part (22, 122, 222, 322, 422) of said plant (16, 116, 216, 316, 416).

4. Method according to any one of the preceding claims, wherein at least said stem part (15, 115, 215, 315, 415) on which the new roots (27) are grown is positioned substantially horizontal.

5. Method according to any one of the preceding claims, wherein part of the roots (27) distanced from the or each shoot is positioned at a level higher then at least part of the further roots, especially higher then the stem part on which the new roots are grown.

6. Method according to any one of the preceding claims, wherein means are provided for blocking root growth of the roots distanced from said part new roots (27) are growing on.

7. Method for cultivating crop plants, preferably according to any one of the preceding claims, wherein the top (21, 221, 321) of said plant is suspended from suspension means (11, 111, 211, 311, 411), wherein periodically the top is lowered, such that it can grow back up again, preferably along said suspension means, **characterized in that** during or subsequent to said lowering of said top (21, 221, 321) the roots (27) are at least partially retracted in a direction away from said top over a similar distance, wherein on the stem part (22, 122, 222, 322, 422) near the roots over a length comparable to said distance new roots are grown, which are or become in contact with grow medium (26).

8. Method according to any one of the preceding claims, wherein the stem part (22, 122, 222, 322, 422) next to the part (15, 115, 215, 315, 415) of the plant on which new roots are grown is positioned substantially horizontally and is bearing crop (24, 124, 224, 324) close to harvesting, said crop being suspended substantially vertically downward from said stem part (22, 122, 222, 322, 422).

9. Method according to claim 8, wherein the stem at least partly is led along guide means (11, 111, 211, 311, 411), such that the stem part (20, 120, 220, 320, 420) between the top (21, 221, 321) and said substantially horizontal part (22, 122, 222, 322, 422) is suspended substantially vertical.

10. Method according to any one of the preceding claims, wherein at least the stem is guided by at least one wire element (11, 111, 211, 311, 411), such that the plant (16, 116, 216, 316, 416) can be moved by movement of said wire element (11, 111, 211, 311, 411).

11. Method according to claim 10, wherein the plant is connected to said wire element by clamping means (19, 119, 219, 319, 419) which are repositioned during growing.

12. Method according to any one of the preceding claims, wherein the crop (24, 124, 224, 324) is harvested by robot means, wherein preferably the plant (16, 116, 216, 316, 416) is handled by robot means also.

13. Method according to any one of the preceding claims, wherein the roots (27) are bred on water, especially on a tidal system.

14. Method according to any one of the preceding claims, wherein the stem is locally at least mechanically and/or chemically handled to induce or expedite root growth.

15. Method according to any one of the preceding claims, wherein periodically at least part of the root bearing part (17, 117, 217, 317, 417) of the plant is cut of.

16. Device for cultivating crop bearing plants having a shoot-root plant body, comprising means (2, 102, 202, 302, 434) for receiving at least part of the root bearing part (15, 115, 215, 315, 415), **characterized in that** means (11, 111, 211, 311, 411) are provided for, during growt of said plants, moving or allowing movement of at least part of the stem (22, 122, 222, 322, 422) next to the root bearing part (15, 115, 215, 315, 415) into said receiving means (2, 102, 202, 302, 434) for inducing or expediting root growth on at least part of said stem part.

17. Device according to claim 16, wherein means are provided for movement of part of the roots distanced from the stem and the shoots out of said receiving means (2, 102, 202, 302, 434).

18. Device according to claim 16 or 17, wherein the receiving means (2, 102, 202, 302, 434) comprises at least an inlet for the plant, at least part of the receiving means next to the receiving means intended for carrying the relevant part (15, 115, 215, 315, 415) of the plant substantially horizontally, the receiving means (2, 102, 202, 302, 434) further comprising means (3, 105) for leading at least part of the root bearing part (15, 115, 215, 315, 415) at a level above said substantially horizontal part.

19. Device according to any one of claims 16 - 18, wherein means (11, 111, 211, 311, 411) are provided for guiding the plant, at least through said receiving means.

20. Device according to any one of claims 16 - 19 and a crop growing plant, wherein the root bearing part (15, 115, 215, 315, 415) of the plant is at least partly positioned in the receiving means (2, 102, 202, 302, 434), wherein part of the stem (20, 120, 220, 320, 420) having shoots next to the top (21, 221, 321) of the plant is suspended substantially vertically from suspension means, at least part of the stem bearing crop (24, 124, 224, 324) at least substantially ready for harvest extends substantially horizontally.

21. Device and crop growing plant according to claim 20, wherein the length of the stem of the plant is limited to the part bearing flowers and/or crop.

22. Device and crop growing plant according to claim 20 or 21, dimensioned such that said stem length can be kept between 1 and 5 m, more in particular between 2 and 4 m and preferably between 2 and 3 m.

23. Warehouse for cultivating crop plants, especially tomatoes, egg-plants, cucumbers, peppers and the like, provided with suspension means above the floor for suspending said plants, wherein root growing means are provided for positioning the root bearing part of each plants to be cultivated at least partly substantially horizontally **characterized in that** means are provided for moving said root bearing part through said root growing means.

24. Warehouse according to claim 23, wherein lighting means (31) are positioned in the warehouse, such that during use the lighting means (31) extend substantially above the crop bearing parts, especially above the flowering parts of the plants.

25. Warehouse according to claim 23 or 24, wherein robotic means are provided for harvesting said crop (24, 124, 224, 324) and/or for moving said root bearing part (15, 115, 215, 315, 415) of each plant and/or for moving suspension means (11, 111, 211, 311, 411) for each plant.

26. Warehouse according to claim 25, wherein robotic means for harvesting are provided, which can during use move under at least part of the crop bearing part of the plant.

## Patentansprüche

1. Verfahren zum Züchten von Nutzpflanzen (16, 116, 216, 316, 416) mit einem Pflanzenkörper aus Trieben und Wurzeln, **dadurch gekennzeichnet, dass** während des Wachstums ein vorzugsweise an die Wurzeln (27) angrenzender Teil des Stiels (22, 122, 222, 322, 422) so präpariert wird, dass neue Wurzeln an diesem Teil des Stiels (22, 122, 222, 322, 422) wachsen, und diese Wurzeln so mit einem Wachstumsmedium (26) in Berührung gebracht werden, dass während des Hervorbringens von Früchten (24, 124, 224, 324) die Länge des Stiels zwischen dem von den Wurzeln (27) am weitesten entfernten Trieb und den Wurzeln in Berührung mit dem Wachstumsmedium (26), die diesem Trieb am nächsten sind, im Verhältnis zur normalen Länge einer Pflanze (16, 116, 216, 316, 416) gleichen Alters verhältnismässig gering gehalten wird.

2. Verfahren nach Anspruch 1, **dadurch gekennzeichnet, dass** die benannte Länge des Stiels im Wesentlichen konstant gehalten wird.

3. Verfahren nach Anspruch 1 oder 2, **dadurch gekennzeichnet, dass** die benannte Länge des Stiels auf im Wesentlichen den normalen Früchte tragenden Teil (22, 122, 222, 322, 422) der Pflanze (16,116,216,316,416) beschränkt wird.

4. Verfahren nach einem der vorangehenden Ansprüche, **dadurch gekennzeichnet, dass** zumindest der Teil des Stiels (15, 115, 215, 315, 415), an dem die neuen Wurzeln (27) wachsen, im Wesentlichen waagerecht gelegt wird.

5. Verfahren nach einem der vorangehenden Ansprüche, **dadurch gekennzeichnet, dass** ein Teil der Wurzeln (27), die sich fern von dem oder jedem Trieb befinden, auf ein Niveau gelegt werden, das höher als zumindest ein Teil der weiteren Wurzeln und insbesondere höher als der Teil des Stiels ist, an dem die neuen Wurzeln wachsen.

6. Verfahren nach einem der vorangehenden Ansprüche, **dadurch gekennzeichnet, dass** Mittel vorgesehen sind, um ein Wurzelwachstum von Wurzeln zu blockieren, die sich fern von dem Teil befinden, an dem neue Wurzeln (27) wachsen.

7. Verfahren zum Züchten von Nutzpflanzen, vorzugsweise nach einem der vorangehenden Ansprüche, worin die Spitze (21, 221, 321) der Pflanze an Aufhängeorgane (11, 111, 211, 311, 411 aufgehängt wird, wobei die Spitze periodisch abgesenkt wird, so dass sie wieder nach oben wachsen kann, vorzugsweise entlang der Aufhängeorgane, **dadurch gekennzeichnet, dass** während oder im Gefolge des Absenkens der Spitze (21, 221, 321) die Wurzeln (27) zumindest teilweise in einer von der Spitze wegweisenden Richtung über eine ähnliche Strecke weggezogen werden, wobei auf dem Teil des Stiels (22, 122, 222, 322, 422) nahe den Wurzeln über eine Länge, die mit dieser Strecke vergleichbar ist, neue Wurzeln wachsen, die mit dem Wachstumsmedium (26) in Berührung stehen oder gelangen.

8. Verfahren nach einem der vorangehenden Ansprüche, **dadurch gekennzeichnet, dass** der Teil des Stiels (22, 122, 222, 322, 422), der dem Teil (15, 115, 215, 315, 415) der Pflanze am nächsten ist, an dem neue Wurzeln wachsen, kurz vor der Ernte im Wesentlichen waagerecht gelegt wird und Früchte (24, 124, 224, 324) trägt, wobei die Früchte im Wesentlichen senkrecht von dem benannten Teil des Stiels (22, 122, 222, 322, 422) herabhängen.

9. Verfahren nach Anspruch 8, **dadurch gekennzeichnet, dass** der Stiel zumindest teilweise so an Führungsorganen (11, 111, 211, 311, 411) entlang geführt wird, dass der Teil des Stiels (20, 120, 220, 320, 420) zwischen der Spitze (21, 221, 321) und dem im Wesentlichen waagerechten Teil (22, 122, 222, 322, 422) im Wesentlichen senkrecht aufgehängt ist.

10. Verfahren nach einem der vorangehenden Ansprüche, **dadurch gekennzeichnet, dass** zumindest der Stiel durch zumindest ein Drahtelement (11, 111, 211, 311, 411) so geführt wird, dass die Pflanze (16, 116, 216, 316, 416) durch eine Bewegung dieses Drahtelements (11, 111, 211, 311, 411) bewegt werden kann.

11. Verfahren nach Anspruch 10, **dadurch gekennzeichnet, dass** die Pflanze durch Klammerelemente (19, 119, 219, 319, 419), die während des Wachstums versetzt werden, mit dem Drahtelement verbunden wird.

12. Verfahren nach einem der vorangehenden Ansprüche, **dadurch gekennzeichnet, dass** die Früchte (24, 124, 224, 324) durch Roboterorgane geerntet werden, wobei die Pflanze (16, 116, 216, 316, 416) vorzugsweise ebenfalls durch Roboterorgane gehandhabt wird.

13. Verfahren nach einem der vorangehenden Ansprüche, **dadurch gekennzeichnet, dass** die Wurzeln (27) auf Wasser gezogen werden, insbesonsere auf einem zyklischen System.

14. Verfahren nach einem der vorangehenden Ansprüche, **dadurch gekennzeichnet, dass** der Stiel lokal zumindest mechanisch und/oder chemisch behandelt wird, um Wurzelwachstum zu induzieren oder zu befördern.

15. Verfahren nach einem der vorangehenden Ansprüche, **dadurch gekennzeichnet, dass** zumindest ein Teil des Wurzeln tragenden Teils (17, 117, 217, 317, 417) der Pflanze abgeschnitten wird.

16. Vorrichtung für die Züchtung Früchte tragender Pflanzen mit einem Pflanzenkörper aus Trieben und Wurzeln, Organc (2, 102, 202, 302, 434) umfassend, um zumindest einen Teil des Wurzeln tragenden Teils (15, 115, 215, 315, 415) aufzunehmen, **dadurch gekennzeichnet, dass** Mittel (11, 111, 211, 311, 411) vorgesehen sind, um während des Wachstums dieser Pflanzen zumindest den Teil des Stiels (22, 122, 222, 322, 422), der dem Wurzeln tragenden Teil (15, 115, 215, 315, 415) am nächsten ist, in die Aufnahmeorgane (2, 102, 202, 302, 434) hineinzubewegen oder diese Bewegung zu ermöglichen, um Wurzelwachstum an zumindest einem Teil dieses Teils des Stiels zu induzieren oder zu befördern.

17. Vorrichtung nach Anspruch 16, **dadurch gekennzeichnet, dass** Mittel vorgesehen sind, um den Teil der Wurzeln, die sich fern vom Stiel und von den Trieben befinden, aus den Aufnahmeorganen (2,102, 202,302,434) herauszubewegen.

18. Vorrichtung nach Anspruch 16 oder 17, **dadurch gekennzeichnet, dass** die Aufnahmeorgane (2. 102, 202, 302. 434) zumindest einen Einlass für die Pflanze umfassen, wobei zumindest ein Teil der Aufnahmeorgane, der sich am nächsten bei den Aufnahmeorganen befindet, dafür bestimmt ist, den in Frage kommenden Teil (15, 115, 215, 315, 415) der Pflanze im Wesentlichen waagerecht zu halten, wobei die Aufnahmeorgane (2, 102, 202, 302, 434) weiter Mittel (3, 105) umfassen, um zumindest einen Teil des Wurzeln tragenden Teils (15, 115, 215, 315, 415) auf ein Niveau über dem im Wesentlichen waagerechten Teil zu bringen.

19. Vorrichtung nach einem der Ansprüche 16 bis 18, **dadurch gekennzeichnet, dass** Mittel (11, 111, 211, 311, 411) vorgesehen sind, um die Pflanze zumindest durch die Aufnahmeorgane zu führen.

20. Vorrichtung nach einem der Ansprüche 16 bis 19 und eine Früchte hervorbringende Pflanze, **dadurch gekennzeichnet, dass** sich der Wurzeln tragende Teil (15, 115, 215, 315, 415) der Pflanze zumindest teilweise in den Aufnahmeorganen (2, 102, 202, 302, 434) befindet, wobei der Teil des Stiels (20, 120, 220, 320, 420) mit Trieben, der der Spitze (21, 221, 321) der Pflanze am nächsten ist, im Wesentlichen senkrecht von den Aufhängeorganen herabhängt, und zumindest der Früchte (24, 124, 224, 324) tragende Teil des Stiels, der zumindest im Wesentlichen erntebereit ist, sich im Wesentlichen waagerecht erstreckt.

21. Vorrichtung und Früchte hervorbringende Pflanze nach Anspruch 20, **dadurch gekennzeichnet, dass** die Länge des Stiels der Pflanze auf den Blumen und/oder Früchte tragenden Teil beschränkt wird.

22. Vorrichtung und Früchte hervorbringende Pflanze nach Anspruch 20 oder 21, so bemessen, dass die Länge des Stiels zwischen 1 und 5 m, insbesondere zwischen 2 und 4 m und bevorzugt zwischen 2 und 3 m gehalten werden kann.

23. Gewächshaus für die Züchtung von Nutzpflanzen, insbesondere von Tomaten, Auberginen. Gurken. Paprikaschoten und dergleichen, das mit Aufhängeorganen über dem Boden zur Aufhängung der Pflanzen ausgerüstet ist, wobei Wurzelwachstumsorgane zur Verfügung stehen, um den Wurzeln tragenden Teil jeder zu züchtenden Pflanze zumindest teilweise im Wesentlichen waagerecht zu legen, **dadurch gekennzeichnet, dass** Mittel vorgesehen sind, um den Wurzeln tragenden Teil durch die Wurzelwachstumsorgane hindurch zu bewegen.

24. Gewächshaus nach Anspruch 23, **dadurch gekennzeichnet, dass** Beleuchtungsorgane (31) so im Gewächshaus angeordnet sind, dass im Gebrauch die Beleuchtungsorgane (31) sich im Wesentlichen über den Früchte tragenden Teilen erstrecken, insbesondere über den blühenden Teilen der Pflanzen.

25. Gewächshaus nach Anspruch 23 oder 24, **dadurch gekennzeichnet, dass** Roboterorgane für das Ernten der Früchte (24, 124, 224, 324) und/oder die Bewegung des Wurzeln tragenden Teils (15, 115, 215, 315, 415) jeder Pflanze und/oder die Bewegung der Aufhängeorgane (11, 111, 211, 311, 411) jeder Pflanze vorgesehen sind.

26. Gewächshaus nach Anspruch 25, **dadurch gekennzeichnet, dass** Roboterorgane zum Ernten vorgesehen sind, die sich im Gebrauch unter zumindest einem Teil des Früchte tragenden Teils der Pflanze bewegen können.

## Revendications

1. Procédé de culture de plantes cultivées (16, 116, 216, 316, 416) ayant un corps végétal pousse-racine, dans lequel durant la croissance la partie de la tige (22, 122, 222, 322, 422) de préférence adjacente aux racines (27) est préparée de sorte que de nouvelles racines se développent sur ladite partie de tige (22, 122, 222, 322, 422), lesquelles nouvelles racines sont portées au contact d'un milieu de croissance (26), de sorte que durant la production de la culture (24, 124, 224, 324) la longueur de tige comprise entre la pousse la plus éloignée des racines (27) et les racines au contact du milieu de croissance (26) la plus proche de ladite pousse soit maintenue à une longueur relativement courte, comparée à une longueur normale de ladite plante (16, 116, 216, 316, 416) au même âge.

2. Procédé selon la revendication 1, dans lequel ladite longueur de tige est maintenue à une longueur substantiellement constante.

3. Procédé selon la revendication 1 ou 2, dans lequel ladite longueur de tige est restreinté à substantiellement la partie normale cultivée à récolter (22, 122, 222, 322, 422) de ladite plante (16, 116, 216, 316, 416) .

4. Procédé selon l'une quelconque des revendications précédentes, dans lequel au moins ladite partie de tige (15, 115, 215, 315, 415) sur laquelle les nouvelles racines (27) ont poussé est placée substantiellement de manière horizontale.

5. Procédé selon l'une quelconque des revendications précédentes, dans lequel la partie des racines (27) éloignée de la ou de chaque pousse est placée à un niveau supérieur par rapport à au moins une partie des racines supplémentaires, spécialement plus haut que la partie de tige sur laquelle les nouvelles racines ont poussé.

6. Procédé selon l'une quelconque des revendications précédentes, dans lequel des moyens sont fournis pour bloquer la croissance racinaire des racines éloignées de ladite partie de nouvelles racines (27) qui ont poussé dessus.

7. Procédé de culture de plantes cultivées, de préférence selon l'une quelconque des revendications précédentes, dans lequel le sommet (21, 221, 321) de ladite plante est suspendu à partir de moyens de suspension (11, 111, 211, 311, 411), dans lesquels périodiquement le sommet est abaissé de sorte qu'elle puisse croître à nouveau vers l'arrière, de préférence le long desdits moyens de suspension, **caractérisé en ce que** durant ou après ledit abaissement dudit sommet (21, 221, 321) les racines (27) sont au moins partiellement rétractées dans un sens éloigné dudit sommet sur une distance similaire, dans lequel sur la partie de tige (22, 122, 222, 322, 422) proche des racines sur une longueur comparable à ladite distance de nouvelles racines se développent, qui sont ou entrent en contact avec le milieu de croissance (26).

8. Procédé selon l'une quelconque des revendications précédentes, dans lequel la partie de tige (22, 122, 222, 322, 422) proche de la partie (15, 115, 215, 315, 415) de la plante sur laquelle de nouvelles racines se sont développées est placée substantiellement de manière horizontale et porte la partie à récolter (24, 124, 224, 324) près du moment de la récolte, ladite partie à récolter étant suspendue substantiellement de manière verticale vers le bas à partir de ladite partie de tige (22, 122, 222, 322, 422).

9. Procédé selon la revendication 8, dans lequel la tige au moins en partie est conduite le long de moyens de guidage (11, 111, 211, 311, 411), de sorte que la partie de tige (20, 120, 220, 320, 420) entre le sommet (21, 221, 321) et ladite partie substantiellement horizontale (22, 122, 222, 322, 422) est suspendue de manière substantiellement verticale.

10. Procédé selon l'une quelconque des revendications précédentes, dans lequel au moins la tige est guidée par au moins un élément de type câble (11, 111, 211, 311, 411), de sorte que la plante (16, 116, 216, 316, 416) puisse être déplacée par le mouvement dudit élément de type câble (11, 111, 211, 311, 411).

11. Procédé selon la revendication 10, dans lequel la plante est reliée au dit élément de type câble par des brides de serrage (19, 119, 219, 319, 419) qui sont repositionnées durant la croissance.

12. Procédé selon l'une quelconque des revendications précédentes, dans lequel la partie à récolter (24, 124, 224, 324) est récoltée par des moyens robotisés, dans lesquels de préférence la plante (15, 116, 216, 316, 416) est manipulée également par des moyens robotisés.

13. Procédé selon l'une quelconque des revendications précédentes, dans lequel les racines (27) sont multipliées sur de l'eau, spécialement sur un système de vague.

14. Procédé selon l'une quelconque des revendications précédentes, dans lequel la tige est localement au moins mécaniquement et/ou chimiquement manipulée pour induire ou accélérer la croissance racinaire.

15. Procédé selon l'une quelconque des revendications précédentes, dans lequel périodiquement au moins une partie de la partie portant les racines (17, 117, 217, 317, 417) de la plante est coupée.

16. Dispositif de culture de plantes portant une partie à récolter ayant un corps végétal pousse-racine, comprenant des moyens (2, 102, 202, 302, 434) pour recevoir au moins la partie portant les racines (15, 115, 215, 315, 415), **caractérisé en ce que** des moyens (11, 111, 211, 311, 411) sont fournis pour, durant la croissance desdites plantes, déplacer ou permettre le mouvement d'au moins une partie de la tige (22, 122, 222, 322, 422) proche de la partie portant les racines (15, 115, 215, 315, 415) dans lesdits moyens récepteurs (2, 102, 202, 302, 434) pour induire ou accélérer la croissance racinaire sur au moins une partie de ladite partie de tige.

17. Dispositif selon la revendication 16, dans lequel des moyens sont fournis pour le mouvement de la partie des racines éloignées de la tige et des pousses hors desdits moyens récepteurs (2, 102, 202, 302, 434).

18. Dispositif selon la revendication 16 ou 17, dans lequel les moyens récepteurs (2, 102, 202, 302, 434) comprennent au moins un orifice d'entrée pour la plante, au moins une partie des moyens récepteurs proche des moyens récepteurs prévus pour porter la partie concernée (15, 115, 215, 315, 415) de la plante substantiellement de manière horizontale, les moyens récepteurs (2, 102, 202, 302, 434) comprenant en outre des moyens (3, 105) pour conduire au moins une partie de la partie portant des racines (15, 115, 215, 315, 415) à un niveau situé au-dessus de ladite partie substantiellement horizontale.

19. Dispositif selon l'une quelconque des revendications 16 à 18, dans lequel des moyens (11, 111, 211, 311, 411) sont fournis pour guider la plante, au moins à travers lesdits moyens récepteurs.

20. Dispositif selon l'une quelconque des revendications 16 à 19 et plante portant une partie à récolter, dans lesquels la partie portant les racines (15, 115, 215, 315, 415) de la plante est au moins partiellement placée dans les moyens récepteurs (2, 102, 202, 302, 434), dans lequel la partie de la tige (20, 120, 220, 320, 420) ayant des pousses près du sommet (21, 221, 321) de la plante est suspendue substantiellement verticalement à partir des moyens de suspension, au moins une partie de la tige portant la partie à récolter (24, 124, 224, 324) au moins substantiellement prête pour la récolte s'étend substantiellement de manière horizontale.

21. Dispositif et plante cultivée selon la revendication 20, dans lesquels la longueur de la tige de la plante est limitée à la partie portant des fleurs et/ou les produits à récolter.

22. Dispositif et plante cultivée selon la revendication 20 ou 21, dimensionnés de sorte que ladite longueur de tige peut être maintenue entre 1 et 5 m, plus en particulier entre 2 et 4 m et de préférence entre 2 et 3 m.

23. Serre pour cultiver les plantes cultivées, spécialement des tomates, des aubergines, des concombres, des poivrons et similaires, équipée de moyens de suspension au-dessus du sol pour suspendre lesdites plantes, dans laquelle des moyens de croissance racinaire sont fournis pour placer la partie portant des racines de chaque plante à cultiver au moins partiellement de manière substantiellement horizontale **caractérisée en ce que** des moyens sont fournis pour déplacer ladite partie portant des racines à travers lesdits moyens de croissance racinaire.

24. Serre selon la revendication 23, dans laquelle des moyens d'éclairage (31) sont placés dans la serre de sorte que durant l'utilisation les moyens d'éclairage (31) s'étendent substantiellement au-dessus des parties portant la culture, spécialement au-dessus des parties florales des plantes.

25. Serre selon la revendication 23 ou 24, dans laquelle des moyens robotisés sont fournis pour récolter ladite culture (24, 124, 224, 324) et/ou pour déplacer ladite partie portant des racines (15, 115, 215, 315, 415) de chaque plante et/ou pour déplacer les moyens de suspension (11, 111, 211, 311, 411) pour chaque plante.

26. Serre selon la revendication 25, dans laquelle des moyens robotisés sont fournis pour la récolte, qui peuvent durant l'utilisation se déplacer sous au moins une partie de la partie à récolter de la plante.
